(19)

**Europäisches Patentamt**
**European Patent Office**
**Office européen des brevets**

(11)  **EP 4 417 948 A1**

(12)  **EUROPEAN PATENT APPLICATION**
published in accordance with Art. 153(4) EPC

(43) Date of publication:
**21.08.2024  Bulletin 2024/34**

(21) Application number: **21960387.5**

(22) Date of filing: **01.11.2021**

(51) International Patent Classification (IPC):
**G01J 5/48** (2022.01)

(86) International application number:
**PCT/CN2021/127954**

(87) International publication number:
**WO 2023/060660 (20.04.2023 Gazette 2023/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **13.10.2021  CN 202111192633**

(71) Applicants:
  • **Beijing Research Institute of Telemetry**
    **Beijing 100094 (CN)**
  • **Aerospace Long March Launch Vehicle**
    **Technology Co. Ltd.**
    **Beijing 100176 (CN)**

(72) Inventors:
  • **MOU, Jinchao**
    **Beijing 100094 (CN)**
  • **ZHU, Hailiang**
    **Beijing 100094 (CN)**

  • **LI, Lianghai**
    **Beijing 100094 (CN)**
  • **WANG, Kai**
    **Beijing 100094 (CN)**
  • **ZHANG, Zhenhua**
    **Beijing 100094 (CN)**
  • **LIU, Ganyu**
    **Beijing 100094 (CN)**
  • **ZHOU, Yuxin**
    **Beijing 100094 (CN)**
  • **XIE, Shenglin**
    **Beijing 100094 (CN)**
  • **LIU, Hao**
    **Beijing 100094 (CN)**
  • **HUANG, Hui**
    **Beijing 100094 (CN)**

(74) Representative: **Petraz, Gilberto Luigi et al**
    **GLP S.r.l.**
    **Viale Europa Unita, 171**
    **33100 Udine (IT)**

(54)  **TERAHERTZ FOCAL PLANE IMAGING DETECTOR, IMAGING SYSTEM AND IMAGING METHOD**

(57)    A terahertz focal plane imaging detector, imaging system and imaging method. The imaging detector comprises a metasurface wave absorbing module (1), a deformation module, a magnetic detection module (4), and a data readout module; a magnetic film (3) is provided at the bottom of the metasurface wave absorbing module (1); the metasurface wave absorbing module (1) receives terahertz signals and then absorbs waves to generate heat; the deformation module produces deformation to drive the magnetic film (3) at the bottom of the metasurface wave absorbing module (1) to move accordingly, so as to converts deformation displacement into a change in a magnetic field; the magnetic detection module (4) converts the change amount of the magnetic field into the change amount of a resistance value; the data readout module reads a resistance signal and converts same into a voltage signal. The deformation displacement is converted into a change in a magnetic field for imaging, noise equivalent power (NEP) has excellent performance, the response speed is higher, thus the requirement of real-time imaging can be can satisfied, the design of a working frequency band is more flexible, imaging can be achieved at room temperature, without additional refrigeration equipment, the structural design is reasonable, and thus the requirement of preparing a large-scale array can be satisfied.

FIG. 1

**Description**

This application claims priority to the Chinese patent application No. 2021111926333 filed with the China Patent Office on October 13, 2021, and titled "TERAHERTZ FOCAL PLANE IMAGING DETECTOR, IMAGING SYSTEM AND IMAGING METHOD", the entire contents of which are incorporated herein by reference.

**FIELD**

The present disclosure relates to a terahertz focal plane imaging detector, an imaging system and an imaging method, and in particular to a terahertz focal plane imaging detector, an imaging system and an imaging method based on magnetic detection and a metasurface, and belongs to the technical field of focal plane imaging.

**BACKGROUND**

The terahertz focal plane imaging technology is one of the research hotspots in the field of terahertz detection and perception, and is also one of the important development trends of terahertz detection and perception systems. Terahertz focal plane imaging has three main advantages as follows: (1) the imaging is real-time and a video-level images of a non-cooperative target can be obtained; (2) original pixel-level information of a target can be obtained, which is superior to other technical approaches in terms of information completeness and flexibility, and can provide a high-quality information source for target identification; (3) it has universal, spectral, and serialized characteristics in terms of field of view, focal length, operating frequency band and the like, which can meet the needs of various tasks. Due to the apparent advantages of the terahertz focal plane imaging technology, it has received widespread attention from various countries. The United States has established research projects such as "Terahertz Focal Plane Imaging Technology", "Submillimeter Wave Focal Plane Imaging Technology", and "Advanced Scanning Imaging Project" for use in the military field. Europe has established a number of related projects in its seventh and eighth frameworks to promote the commercial application of the terahertz focal plane imaging technology. The core of the terahertz focal plane imaging technology is terahertz detection devices. Common THz detection devices mainly include infrared technology devices based on photonics such as bolometers, Golay cells, and pyroelectrics, as well as devices based on electronics such as Schottky diodes and field effect transistors.

Terahertz imaging technologies based on electronics are mostly based on transistors. In 2018, the French J. Meilhan team studied the antenna-bonded bolometer applied to 2.5THz, with an equivalent noise power reaching $86\mathrm{pW}/\sqrt{Hz}$. In 2019, D. Rozban et al. proposed a focal plane array imaging system based on glow discharge, which operates at 1THz and requires the assistance of a CMOS camera, with an array scale reaching 128×128, achieving the contour imaging of an object with a size of 10cm$^2$ at 5 meters away. In the same year, Tianjin University studied CMOS-based terahertz near-field sensors with an operating frequency of 330 to 336 GHz and a spatial resolution of $\mu$m level. From the above research results, it can be seen that the terahertz focal plane imaging technology based on electronics usually has a higher sensitivity in the low-frequency terahertz band (<1THz), but it is restricted by the performance of transistors and it is difficult to adjust the operating frequency.

The terahertz focal plane imaging technology based on photonics is based on the infrared imaging technology and uses photoconduction or thermal detection mechanisms to achieve terahertz band imaging. In 2018, Zhang et al. from the National Institute of Information and Communications Technology in Japan used a planar resonant structure to achieve active imaging at 3 THz with a spatial resolution of 200 $\mu$m. In the same year, Suguru Hoson et al. from the University of Tokyo developed a terahertz detector based on a micro-electromechanical system (MEMS), which uses the thermal sensitivity of material resistance to detect the intensity of terahertz waves. The detector has an operating bandwidth of several kHz, a response speed up to 50mS, and an equivalent noise power of $80\mathrm{pW}/\sqrt{Hz}$ at a temperature of 80K. In 2019, R. F. Su et al. developed a terahertz detector based on superconducting tunnel junction, achieving an extremely low equivalent noise power of $0.2\mathrm{pW}/\sqrt{Hz}$ at a frequency of 0.65THz at a temperature of 4.2K. From the above review of the current technological status in recent years, it can be seen that the terahertz detection technology based on photonics usually has higher sensitivity in the high-frequency terahertz band (>1THz). However, due to the limitation of the absorption characteristics of the material, it has a high absorption rate only at a specific wavelength, which means that continuous and flexible detection cannot be achieved in the terahertz band. In addition, since the thermal-sensitive detector uses contact direct current (DC) bias and signal readout, a complex readout circuit needs to be introduced, which greatly increases the manufacturing cost and limits the scale of the detector array. At the same time, the circuit brings thermal noise that cannot be isolated and eliminated, resulting in a decrease in the sensitivity of the detector and poor imaging effect. Since the energy of terahertz photons is low, even lower than the energy of background thermal noise at room temperature, a refrigeration device is required to reduce the background thermal noise, such as terahertz detection devices operating at 80K and 4.2K in the above-mentioned studies. This further increases the application cost of the terahertz focal plane imaging technology, thus affecting its widespread application.

In summary, there is an urgent need to provide a terahertz focal plane imaging detection technology that has the advantages of flexible design of an operating frequency band, an operating temperature at room temperature without refrigeration, ease to form a large-scale array, low equivalent noise power, fast response time and the like.

**SUMMARY**

An object of the present disclosure is to overcome the above-mentioned defects of the prior art and provide a terahertz focal plane imaging detector, which realizes the design flexibility of the operating frequency band and imaging at room temperature without additional refrigeration devices, has a reasonable structural design so as to meet the needs of production of large-scale arrays, and has excellent equivalent noise power (NEP) performance with an equivalent noise power reaching the pW level, and a response time of no more than 100mS so as to meet the real-time imaging needs.

Another object of the present disclosure is to provide an imaging system and an imaging method including the terahertz focal plane imaging detector.

The above-mentioned objects of the present disclosure are mainly achieved through the following technical solutions.

A terahertz focal plane imaging detector includes a metasurface wave absorbing module, a deformation module, a magnetic detection module, and a data readout module, wherein the deformation module is connected to the metasurface wave absorbing module, a magnetic film is provided at a bottom of the metasurface wave absorbing module, and the metasurface wave absorbing module is configured to absorb waves to generate heat after receiving a terahertz signal, so as to cause the deformation module to deform, driving the magnetic film at the bottom of the metasurface wave absorbing module to move accordingly, thereby converting a deformation displacement into a change in a magnetic field; the magnetic detection module is configured to detect the change in the magnetic field and convert the change in the magnetic field into a change in a resistance value, and the data readout module is configured to read a resistance signal from the magnetic detection module and convert the resistance signal into a voltage signal and then output the voltage signal outwardly.

In the above-mentioned terahertz focal plane imaging detector, the metasurface wave absorbing module includes a pixel array composed of n×m metasurface pixels, each metasurface pixel includes p×q metasurface units, each metasurface pixel corresponds to one deformation module, one magnetic detection module and one data readout module, and a total of n×m deformation modules, n×m magnetic detection modules and n×m data readout modules are included in the metasurface wave absorbing module, where n, m, p, and q are all positive integers greater than or equal to 1.

In the above-mentioned terahertz focal plane imaging detector, each metasurface pixel of the metasurface wave absorbing module includes a top layer, a middle layer, a bottom layer and a magnetic film, and the layers are tightly bonded, wherein the magnetic film has a thickness of 5 to 10 $\mu$m and is coated on a lower surface of the bottom layer.

In the above-mentioned terahertz focal plane imaging detector, the magnetic film is formed by coating neodymium iron boron (NdFeB) on the lower surface of the bottom layer by chemical vapor deposition.

In the above-mentioned terahertz focal plane imaging detector, the deformation module includes cantilever beams, a pillar and a substrate, and the number of the cantilever beams is two, the cantilever beams are symmetrically disposed on both sides of the metasurface pixel, and a first end of the cantilever beam is bent and connected to the metasurface pixel, and a second end of the cantilever beam is connected to the pillar, the pillar is disposed on the substrate, and the metasurface wave absorbing module is in a suspended state by being connected to the deformation module.

In the above-mentioned terahertz focal plane imaging detector, the cantilever beam is a double-layer structure with two layers tightly bonded, and materials of the two layers are Au and $Si_3N_4$ respectively.

In the above-mentioned terahertz focal plane imaging detector, the magnetic detection module is a TMR film disposed on a surface of the substrate of the deformation module; and the TMR film has a thickness of 5 to 10 $\mu$m.

In the above-mentioned terahertz focal plane imaging detector, the TMR film is coated on the surface of the substrate by chemical vapor deposition, specifically by using a vapor deposition device to sequentially evaporate iron oxide $Fe_3O_4$, aluminum oxide $Al_2O_3$ and iron oxide $Fe_3O_4$.

In the above-mentioned terahertz focal plane imaging detector, a distance between the magnetic film and the TMR film is 10 to 20 $\mu$m; an area relationship between the magnetic film, the TMR film and a wave absorbing surface is: an area of the wave absorbing surface > an area of the magnetic film > an area of the TMR film; the area of the TMR film is 50% to 80% of the area of the magnetic film; the area of the magnetic film is 50% to 80% of the area of the wave absorbing surface.

In the above-mentioned terahertz focal plane imaging detector, a topological structure of the TMR film is a TMR push-pull half-bridge unit, the TMR push-pull half-bridge unit includes TMR1 and TMR2, TMR1 is placed in a positive sensitive direction opposite to a positive sensitive direction of TMR2, a first end of TMR1 is connected to a bias voltage $V_{bias}$, and a second end of TMR1 is connected to a first end of TMR2, a second end of TMR2 is grounded, and an output signal $V_{out}$ is derived from a connection between TMR1 and TMR2.

In the above-mentioned terahertz focal plane imaging detector, the data readout module includes an analog module and a digital module, wherein the analog module is configured to convert the resistance signal received from the magnetic detection module into the voltage signal, and output the voltage signal to the digital module after filtering and amplification, and the digital module is configured to digitize the voltage signal received.

In the above-mentioned terahertz focal plane imaging detector, the analog module includes a reference current source circuit, a digital readout channel, a current comparator circuit, a ramp generator circuit, and a low voltage differential signaling (LVDS) driving and receiving module, wherein the reference current source circuit is configured to provide a current reference; the digital readout channel is composed of a detection bridge branch, a reference bridge branch, a non-uniformity correction circuit, an integral amplifying circuit, a sampling and holding circuit, a comparator and a signal acquisition circuit, and configured to perform signal readout and digital output; the ramp generator circuit and the current comparator circuit constitute a single slope analog-to-digital converter (ADC), which is configured to perform digital output; the LVDS driving and receiving module constitutes an LVDS high-speed input and output interface circuit, which is configured to perform high-speed data transmission; the digital module includes a central control circuit, a static register writing module, a next unit of computing (NUC) control circuit, a counter circuit, a row/column selection circuit, a transcoding circuit, a parallel-to-serial conversion circuit, and a row/column protection circuit, wherein the static register writing module is configured to write and store an external input control signal in a corresponding register at a beginning of each frame; the NUC control circuit is configured to take the external input control signal as NUC correction data and store it in the corresponding register during a reset period of each frame; the central control circuit is configured to control timing of completing row selection control and column selection control and control row clearing of the counter circuit under the control signal written during the beginning of each frame; the row selection circuit is configured to generate a row selection signal for each row of pixels under an action of the central control circuit; the column selection circuit is configured to generate a column selection signal for each column of pixels under the action of the central control circuit; the row/column protection circuit is configured to count a high level time of the row/column selection signal generated by the row/column selection circuit to avoid a phenomenon where a certain row/column of pixels is always selected and burned due to heat accumulation; the transcoding circuit is configured to convert the signal output by the row/column selection circuit into a natural binary signal; the parallel-to-serial conversion circuit is configured to convert a parallel signal output by the pixel array into a serial signal.

A terahertz focal plane imaging system includes the above-mentioned imaging detector, a first off-axis parabolic mirror, a second off-axis parabolic mirror, a terahertz wave source and a processor, wherein the terahertz wave source is disposed close to the first off-axis parabolic mirror, the imaging detector is disposed close to the second off-axis parabolic mirror, an imaged object is disposed between the two off-axis parabolic mirrors, the imaging detector is connected to the processor, terahertz waves emitted by the terahertz wave source pass through the first off-axis parabolic mirror, the imaged object and the second off-axis parabolic mirror sequentially and are absorbed by the imaging detector, the imaging detector is configured to output the voltage signal to the processor, and the processor is configured to receive the voltage signal and process the voltage signal to obtain an image of the imaged object.

In the above-mentioned terahertz focal plane imaging system, the terahertz wave source is disposed at a focus of the first off-axis parabolic mirror; and the imaging detector is disposed within 5 mm in front of and behind a focus of the second off-axis parabolic mirror.

In the above-mentioned terahertz focal plane imaging system, a distance between the two off-axis parabolic mirrors is greater than one focal length of the off-axis parabolic mirror, and central optical axes of the two off-axis parabolic mirrors coincide, and light-facing surfaces of the two off-axis parabolic mirrors face each other; a distance between the metasurface wave absorbing module and an optical center of the second off-axis parabolic mirror is less than the focal length of the off-axis parabolic mirror.

A method for imaging using the above-mentioned terahertz focal plane imaging detector includes: (1) building an imaging system, specifically including: disposing a terahertz wave source near a first off-axis parabolic mirror, disposing an imaged object between two off-axis parabolic mirrors, disposing the imaging detector near a second off-axis parabolic mirror, and connecting the imaging detector to a processor; (2) turning on the terahertz wave source, passing terahertz waves emitted by the terahertz wave source through the first off-axis parabolic mirror, the imaged object and the second off-axis parabolic mirror sequentially, and then receiving the terahertz waves by the metasurface wave absorbing module of the imaging detector; (3) after receiving the terahertz waves by the metasurface wave absorbing module, converting, by the metasurface wave absorbing module, an electromagnetic energy of the terahertz waves into a thermal energy to generate heat, so as to cause the deformation module to deform, driving the magnetic film at the bottom of the metasurface wave absorbing module to move accordingly, thereby converting the deformation displacement into the change in the magnetic field; detecting, by the magnetic detection module, the change in the magnetic field and converting, by the magnetic detection module, the change in the magnetic field into the change in the resistance value, reading, by the data readout module, the resistance signal from the magnetic detection module, converting, by the data readout module, the resistance signal into the voltage signal and then outputting, by the data readout module, the voltage signal to the processor; and (4) receiving, by the processor, the voltage signal and processing, by the processor, the voltage signal to obtain an image of the imaged object.

In the above-mentioned method for imaging using the terahertz focal plane imaging detector, in step (1), the terahertz wave source is disposed at a focus of the first off-axis parabolic mirror; the imaging detector is disposed within 5 mm in front of and behind a focus of the second off-axis parabolic mirror; a distance between the two off-axis parabolic mirrors is greater than one focal length of the off-axis parabolic mirror, and central optical axes of the two off-axis parabolic mirrors coincide, and light-facing surfaces of the two off-axis parabolic mirrors face each other; a distance between the metasurface wave absorbing module and an optical center of the second off-axis parabolic mirror is less than the focal length of the off-axis parabolic mirror; the off-axis parabolic mirrors are adjusted so that the terahertz waves emitted by the terahertz wave source impinge on the pixel array of the metasurface wave absorbing module and form a parallel beam between the two off-axis parabolic mirrors.

Compared with the prior art, the present disclosure has the following beneficial effects.

(1) The present disclosure provides a new terahertz focal plane imaging detector, composed of a metasurface wave absorbing module, a deformation module, a magnetic detection module, and a data readout module. The deformation module is connected to the metasurface wave absorbing module, a magnetic film is provided at a bottom of the metasurface wave absorbing module, and the metasurface wave absorbing module is configured to absorb waves to generate heat after receiving a terahertz signal, so as to cause the deformation module to deform, driving the magnetic film at the bottom of the metasurface wave absorbing module to move accordingly, thereby causing a change in a magnetic field. The resistance value of the magnetic detection module varies with the change in the magnetic field. The data readout module is configured to read the resistance value from the magnetic detection module and convert the resistance value into a voltage signal for imaging. In the present disclosure, the deformation displacement is converted into the change in the magnetic field for imaging, which realizes a superior equivalent noise power (NEP) performance and a faster response speed so as to meet the real-time imaging needs; realizes more design flexibility of the operating frequency band and imaging at room temperature without additional refrigeration devices, and has a reasonable structural design so as to meet the needs of production of large-scale arrays, as compared to the existing terahertz imaging systems.

(2) The imaging detector in the present disclosure is based on the principle of thermal-optical conversion imaging. Compared with the existing terahertz imaging technology that also uses thermal imaging, the present technology can operate at room temperature (293K) and has lower requirements on ambient temperature. Large and expensive refrigeration devices are not required, and it is simple and low-cost to use and maintain the imaging detector.

(3) The metasurface array in the imaging detector designed in the present disclosure can be arranged on a relatively large scale without changing the structure. In addition, the imaging technology in the present disclosure has excellent system equivalent noise power (NEP) performance, with an equivalent noise power reaching the pW level.

(4) The imaging system in the present disclosure has a faster response speed, with a response time of no more than 100 mS, which can meet the requirements of real-time imaging.

(5) The imaging detector, the imaging system and the implementation method in the present disclosure have the advantages of flexible design of the operating frequency band, an operating temperature at room temperature without refrigeration, ease to form a large-scale array, a low equivalent noise power, a fast response time and the like, which will greatly enhance its practicality in military and civilian commercial fields.

## BRIEF DESCRIPTION OF THE DRAWINGS

FIG. 1 is a schematic diagram of a terahertz focal plane imaging detector according to the present disclosure.
FIG. 2 is a schematic view of a metasurface unit in a metasurface wave absorbing module according to the present disclosure, in which FIG. 2a is a side view and FIG. 2b is a top view.
FIG. 3 is a schematic view of a pixel array, a deformation module, and a magnetic detection module in a metasurface wave absorbing module according to the present disclosure, in which FIG. 3a is a top view, FIG. 3b is a side view 1, and FIG. 3c is a side view 3.
FIG. 4 is an absorbance-frequency characteristic curve of a single pixel in a metasurface wave absorbing module according to the present disclosure.
FIG. 5 is a schematic view of a 3×3 array in a metasurface wave absorbing module in an embodiment of the present disclosure, in which FIG. 5a is a top view, FIG. 5b is a side view 1, and FIG. 5c is a side view 2.
FIG. 6 is a temperature variation curve of a gold back plate of a metasurface wave absorbing module according to the present disclosure.

FIG. 7 is a TMR response curve under an ideal state according to the present disclosure.

FIG. 8 is a schematic diagram of a terahertz focal plane imaging system according to the present disclosure.

FIG. 9 is a schematic view of a three-dimensional structure of a terahertz focal plane imaging detector according to the present disclosure.

FIG. 10 is a schematic diagram of a magnetic detection module according to the present disclosure, in which FIG. 10a is a topological diagram of a circuit of a TMR film, FIG. 10b is a schematic diagram 1 of electrical connections of units of a 4×4 array, and FIG. 10c is a schematic diagram 2 of electrical connections of units of a 4×4 array.

FIG. 11 is a schematic diagram showing the principle of a data readout module according to the present disclosure.

FIG. 12 is a schematic diagram showing the principle of a row/column selection circuit according to the present disclosure.

## DETAILED DESCRIPTION

The present disclosure will be further described in detail below with reference to the accompanying drawings and specific embodiments.

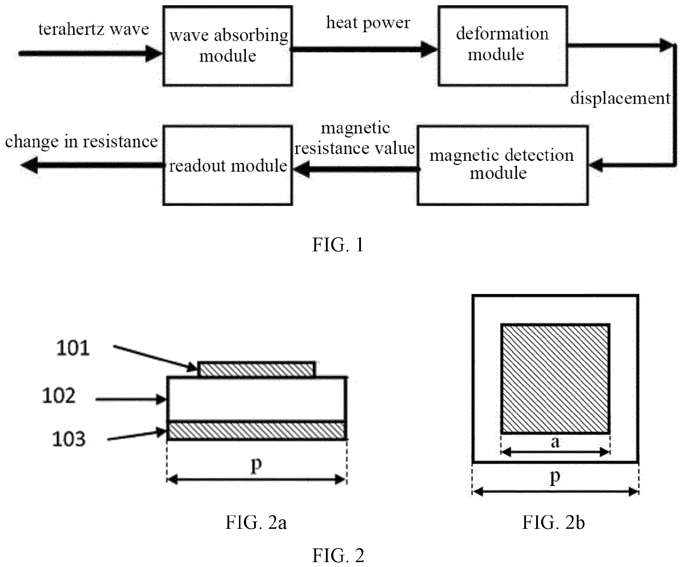

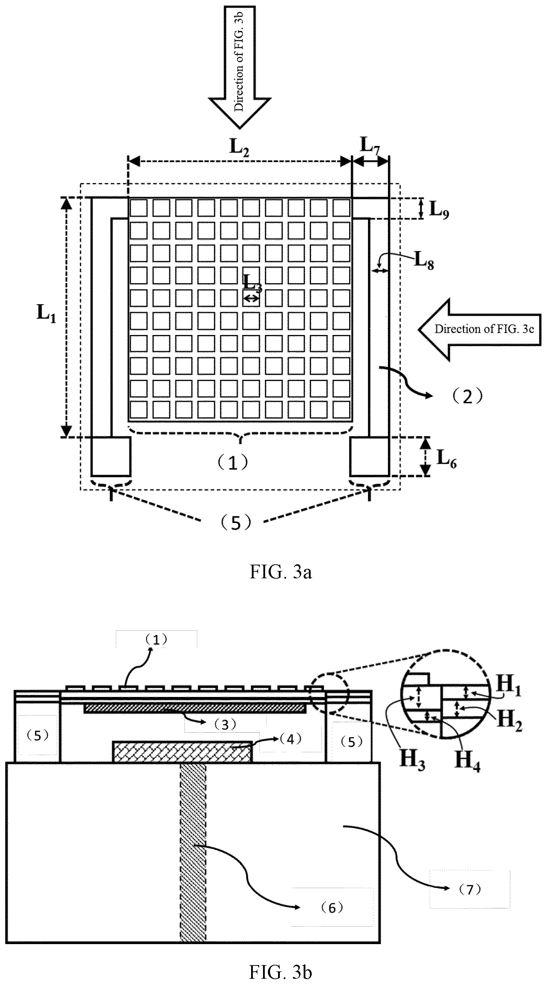

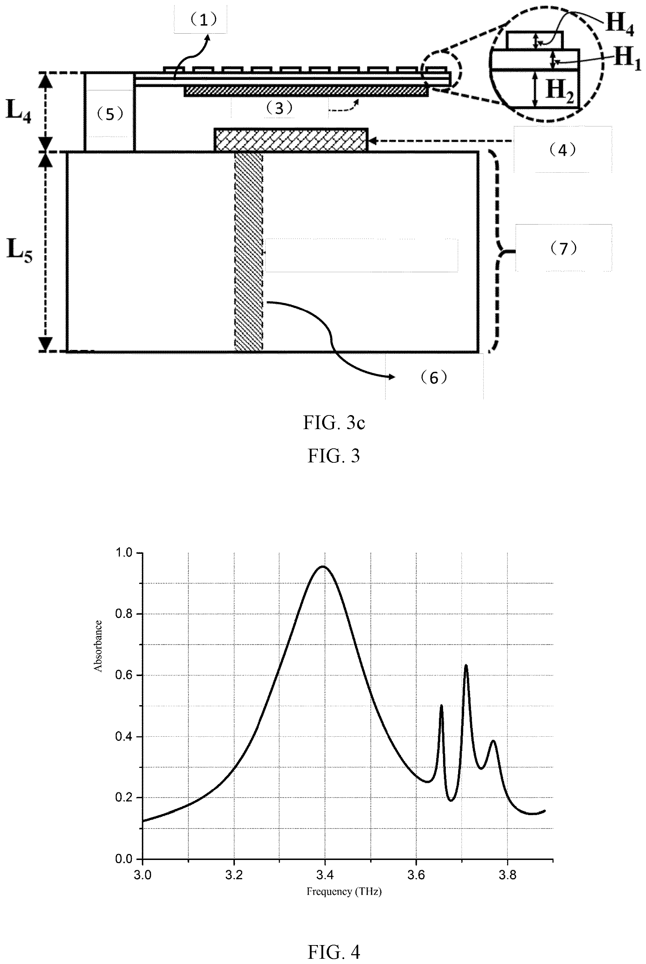

FIG. 1 is a schematic diagram of a terahertz focal plane imaging detector according to the present disclosure. FIG. 3 is a schematic view of a pixel array and a deformation module in a metasurface wave absorbing module according to the present disclosure, in which FIG. 3a is a top view, FIG. 3b is a side view 1, and FIG. 3c is a side view 3. The terahertz focal plane imaging detector includes a metasurface wave absorbing module 1, a deformation module, a magnetic detection module 4, and a data readout module. The deformation module is connected to the metasurface wave absorbing module 1, and a magnetic film 3 is provided at a bottom of the metasurface wave absorbing module 1. The metasurface wave absorbing module 1 is configured to absorb waves to generate heat after receiving a terahertz signal, so as to cause the deformation module to deform, driving the magnetic film 3 at the bottom of the metasurface wave absorbing module to move accordingly, thereby converting a deformation displacement into a change in a magnetic field. The magnetic detection module 4 is configured to detect the change in the magnetic field and convert the change in the magnetic field into a change in a resistance value. The data readout module is configured to read a resistance signal from the magnetic detection module and convert the resistance signal into a voltage signal and then output the voltage signal outwardly.

FIG. 2 is a schematic view of a metasurface unit in a metasurface wave absorbing module according to the present disclosure, in which FIG. 2a is a side view and FIG. 2b is a top view. The metasurface wave absorbing module 1 includes a pixel array composed of n×m metasurface pixels. Each metasurface pixel includes p×q metasurface units. Each metasurface pixel corresponds to one deformation module, one magnetic detection module and one data readout module. A total of n×m deformation modules, n×m magnetic detection modules and n×m data readout modules are included in the metasurface wave absorbing module, where n, m, p, and q are all positive integers greater than or equal to 1.

The metasurface wave absorbing module based on artificial electromagnetic control absorbs terahertz waves, thereby realizing the conversion from the electromagnetic energy in terahertz waves to the thermal energy in solids. A metasurface is a sub-wavelength two-dimensional planar periodic structure formed by repeating metasurface units of a specific shape at a specific spacing. By designing the size and shape of the metasurface unit, artificial control of electromagnetic waves can be achieved.

The electromagnetic metasurface unit designed in the present disclosure is shown in FIG. 2. As can be seen from FIG. 2a, the structure is divided into three layers, and the layers are tightly bonded. As shown in FIG. 3, in an optional embodiment of the present disclosure, the top layer is a square metal sheet 101, with a material of gold and a thickness of $H_4$; the middle layer is a dielectric layer 102, with a material of $Si_3N_4$, a relative dielectric constant of 9.7, and a thickness of $H_1$; the bottom layer is a metal back plate 103, with a material of gold and a thickness of $H_2$. A magnetic film is coated on a surface of the bottom layer 103. Since the frequency of the terahertz waves emitted by the terahertz wave source module is 3.4 THz, the absorbing frequency band of the metasurface wave absorbing module needs to include 3.4 THz. The size parameters of the metasurface unit in the embodiment obtained by optimization design are shown in Table 1.

Table 1. Structural size parameters

| Parameter | $L_1$ | $L_2$ | $L_3$ | $L_4$ | $L_5$ | $L_6$ | $H_4$ |
|---|---|---|---|---|---|---|---|
| Value (μm) | 180 | 150 | 12 | 40 | 200 | 30 | 0.15 |
| Parameter | $L_7$ | $L_8$ | $L_9$ | $H_1$ | $H_2$ | $H_3$ | |
| Value (μm) | 15 | 10 | 10 | 0.35 | 0.5 | 0.8 | |

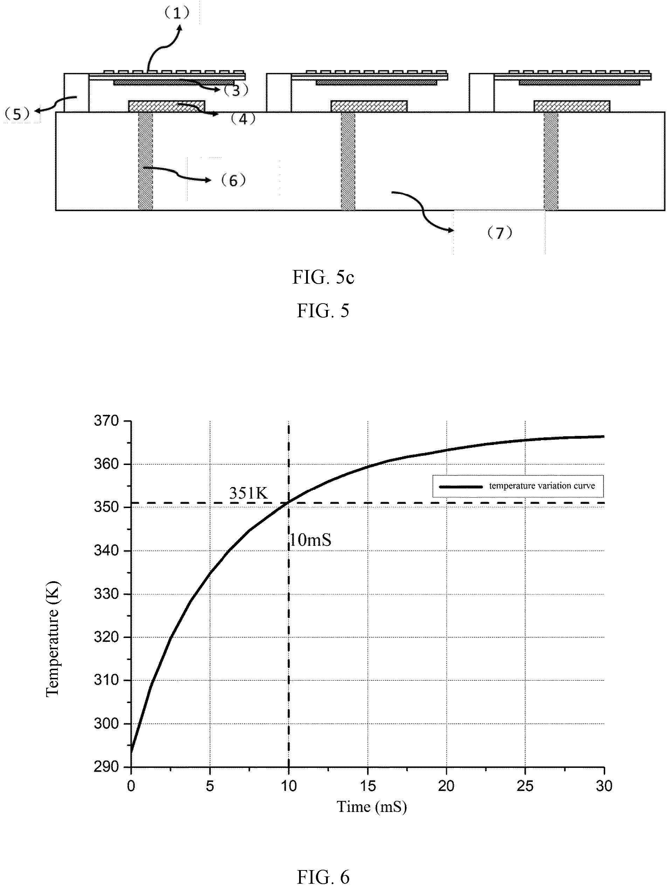

In an optional embodiment of the present disclosure, 10×10 metasurface units form one metasurface pixel, and the metasurface wave absorbing module of the imaging system uses the metasurface pixel as the minimum repeating structure, which can be flexibly arranged as needed to form a large-scale pixel array. The structure of a single metasurface pixel based on electromagnetic metasurface theory is shown in FIG. 2a, and the size parameters of the single metasurface pixel are shown in Table 1. Each pixel contains a wave absorbing plate unit composed of $10 \times 10$ metasurface units. The absorbance-frequency characteristic curve of the metasurface pixel is shown in FIG. 4, and it can be seen that the absorbance of the metasurface pixel reaches a peak value of 95% at 3.4 THz. The artificially controlled metasurface wave absorbing module achieves extremely high terahertz absorption rate. FIG. 6 is a temperature variation curve of a gold back plate of a metasurface wave absorbing module according to the present disclosure.

In addition to the top layer, the middle layer and the bottom layer, each supersurface pixel in the supersurface wave absorbing module in the present disclosure also has a magnetic film attached to a lower surface of the bottom layer. The magnetic film has a thickness of 5 to 10 $\mu$m and is coated on the lower surface of the bottom layer by chemical vapor deposition. The specific process is using a plasma enhanced chemical vapor deposition (PECVD) device to evaporate neodymium iron boron (NdFeB), for example, evaporating $Nd_2Fe_{14}B$.

The deformation module in the present disclosure includes cantilever beams 2, a pillar 5 and a substrate 7. As shown in FIG. 3b, the number of the cantilever beams 2 is two, and the cantilever beams 2 are symmetrically disposed on both sides of the metasurface pixel. A first end of the cantilever beam is bent and tightly connected to the metasurface pixel, and a second end of the cantilever beam is connected to the pillar 5. The pillar 5 is disposed on the substrate 7, and the metasurface wave absorbing module is in a suspended state by being connected to the deformation module. The two $Si_3N_4$ pillars located on the same side of the pixel each extend to form one horizontal cantilever on a horizontal plane with a height of $L_4+L_5$. The cantilever beam has a double-layer structure, and the pillars are connected to the bottom-most substrate.

The deformation module is designed based on the thermal expansion theory, and its main form is a double-layer micro cantilever beam composed of two materials of the same shape tightly bonded: gold and $Si_3N_4$. Due to the huge difference in thermal expansion coefficients of the two materials ($14.2 \times 10^{-6}$(1/K) for gold and $2.3 \times 10^{-6}$(1/K) for $Si_3N_4$), when heated, the cantilever beam made of the two materials tightly fitted together will bend toward one side of the material with a smaller thermal expansion coefficient ($Si_3N_4$) due to the apparent difference in the degree of expansion of the two parts, and the metasurface pixel will move downward accordingly.

As shown in FIG. 3c, the magnetic detection module is a TMR film tightly attached on a surface of the substrate of the deformation module. In an optional embodiment of the present disclosure, the TMR film has a thickness of 5 to 10 $\mu$m. The TMR film is coated on the surface of the substrate by chemical vapor deposition, specifically by using a plasma enhanced chemical vapor deposition (PECVD) device to sequentially evaporate iron oxide ($Fe_3O_4$), aluminum oxide ($Al_2O_3$) and iron oxide ($Fe_3O_4$).

In an optional embodiment of the present disclosure, a distance between the magnetic film and the TMR film is 10 to 20 $\mu$m; an area relationship between the magnetic film, the TMR film and a wave absorbing surface is: an area of the wave absorbing surface > an area of the magnetic film > an area of the TMR film; the area of the TMR film is 50% to 80% of the area of the magnetic film; the area of the magnetic film is 50% to 80% of the area of the wave absorbing surface.

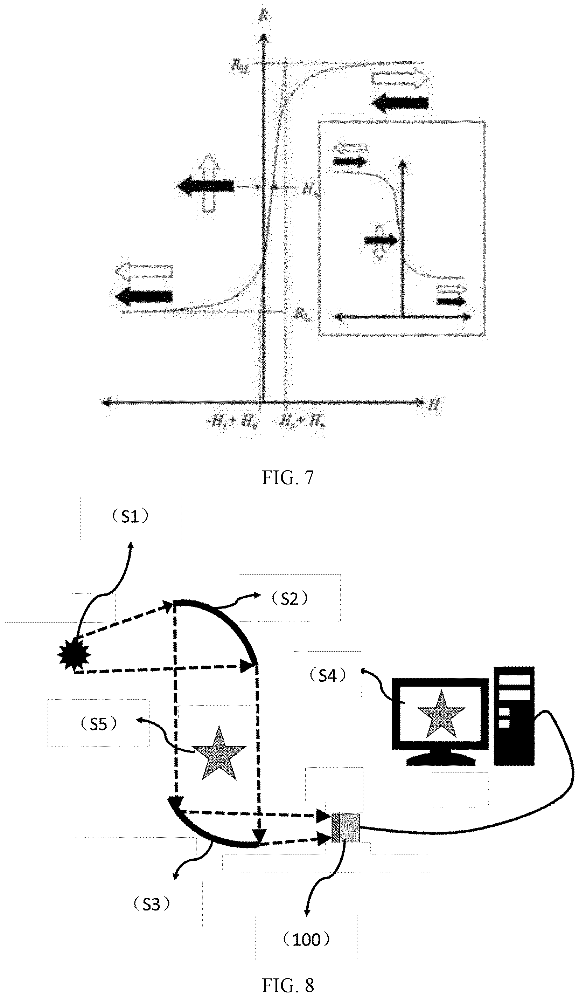

After the metasurface unit is heated, the deformation module is deformed and the metasurface unit moves downward accordingly. At this time, the magnetic film attached to the lower side of the metasurface unit also moves accordingly, causing a change in the magnetic field. The resistance value of the TMR film attached to the substrate varies within a certain range with the change in the magnetic field, and the specific variation is shown in FIG. 7. In this way, the deformation amount is converted into a change in resistance value, completing magnetic detection.

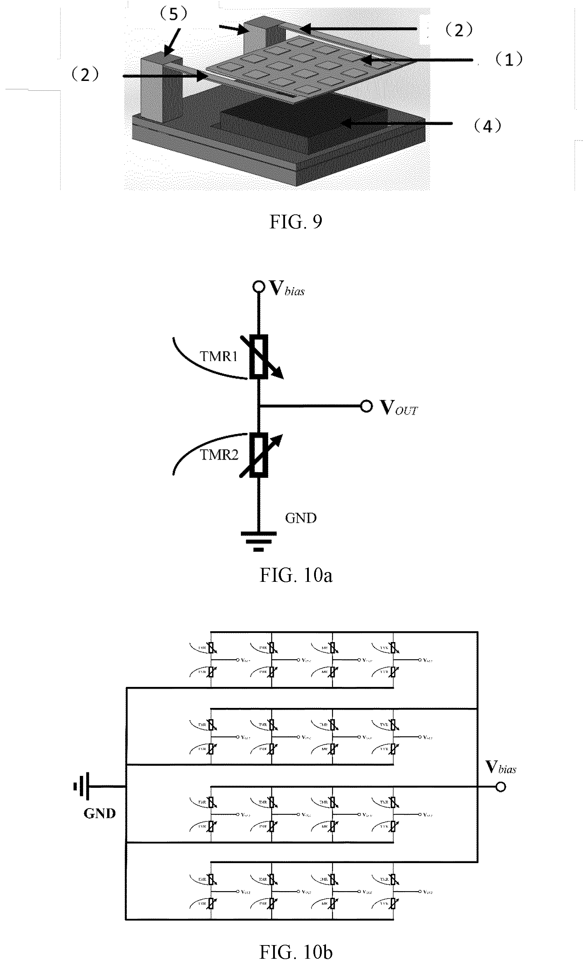

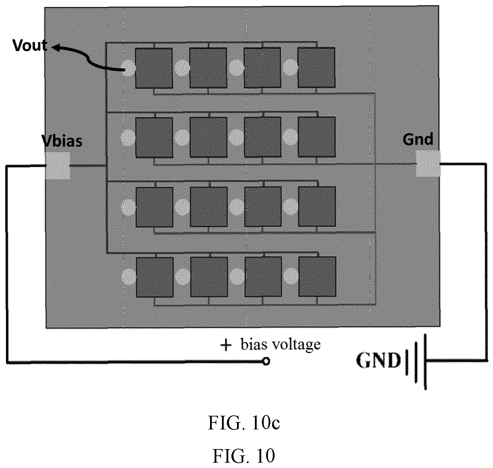

FIG. 10 is a schematic diagram of a magnetic detection module according to the present disclosure, in which FIG. 10a is a topological diagram of a circuit of a TMR film, FIG. 10b is a schematic diagram 1 of electrical connections of units of a $4 \times 4$ array, and FIG. 10c is a schematic diagram 2 of electrical connections of units of a $4 \times 4$ array. The TMR film in the magnetic detection module includes a detection pixel chip. The TMR bridge circuits of different array units in the detection pixel chip are connected in parallel, that is, the bias voltage interface and the ground interface of each unit are converged to the total interface of the detection pixel chip. The output of the TMR bridge circuit of each unit is an independent output, and the output contact is disposed on a back of the detection pixel chip through a through hole in the TMR film, that is, the TMR output contact through hole 6.

As shown in FIG. 10a, the TMR bridge circuit is a TMR push-pull half-bridge unit, the TMR push-pull half-bridge unit includes two TMR structures, TMR1 and TMR2, and performance parameters of TMR1 and TMR2 are consistent. The direction of the arrow and the arc indicate the positive sensitive direction of the magnetic field of TRM. TMR1 is placed in a positive sensitive direction opposite to the positive sensitive direction of TMR2, that is, the resistance of TMR1 increases with the increase in the magnetic field strength in the downward direction, the resistance of TMR2 decreases with the increase in the magnetic field strength in the downward direction, thereby forming a push-pull half-bridge circuit. A first end of TMR1 is connected to a bias voltage $V_{bias}$, and a second end of TMR1 is connected to a first end of TMR2, a second end of TMR2 is grounded, and an output signal $V_{out}$ is derived from a connection between TMR1 and TMR2.

As shown in FIGS. 10b and 10c, taking a $4 \times 4$ array as an example, the interconnection relationship among bias port, ground ports, and signal output ports of units is explained. The bias ports of units are connected to the same bias port through a wire, and the ground ports of units are connected to the same ground port through a wire.

The detection pixel chip and the readout circuit module are in direct contact through metal contacts on the back of the chip and a corresponding base on the readout circuit module, and their positions are fixed by a pressure rod mechanical structure, that is, the pressure rod fixes the detection chip on the base. ADC voltage signal is transmitted between the detection pixel chip and the readout circuit module through metal contacts, where the bias contact provides a stable 0 to 7V voltage bias for the TMR bridge circuit of the detection pixel chip module; the ground contact grounds the detection pixel chip module; the array voltage contact transmits a time-varying voltage signal (0 to 14V), and the signal flows from the TMR bridge circuit of the detection pixel chip module to the readout circuit module.

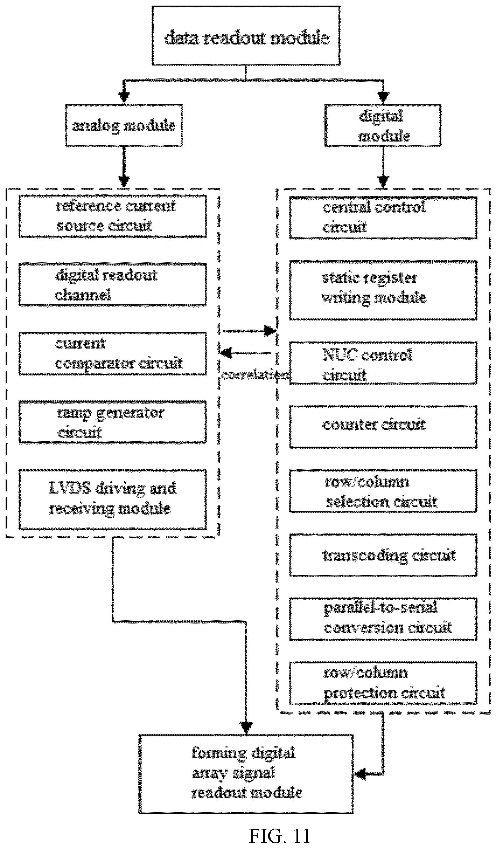

FIG. 11 is a schematic diagram showing the principle of a data readout module according to the present disclosure. The data readout module includes two parts, i.e. an analog module and a digital module, and is configured to generally realize the function of reading the array resistance value output by the magnetic detection module. The analog module is configured to convert the resistance signal received from the magnetic detection module into the voltage signal and output the voltage signal to the digital module after filtering and amplification, and the digital module is configured to digitize the voltage signal received.

The analog module includes a reference current source circuit, a digital readout channel, a current comparator circuit, a ramp generator circuit, and an LVDS driving and receiving module. The reference current source circuit is configured to provide a current reference for other modules of the analog circuit, which is also the basis for power consumption detection. The digital readout channel is composed of a detection bridge branch, a reference bridge branch, a non-uniformity correction circuit, an integral amplifying circuit, a sampling and holding circuit, a comparator and a signal acquisition circuit, and configured to perform signal readout and digital output. The ramp generator circuit and the current comparator circuit constitute a single slope ADC, which is configured to perform digital output. The LVDS driving and receiving module constitutes an LVDS high-speed input and output interface circuit, which is configured to perform high-speed data transmission.

The digital module includes a central control circuit, a static register writing module, a NUC control circuit, a counter circuit, a row/column selection circuit, a transcoding circuit, a parallel-to-serial conversion circuit, and a row/column protection circuit. The static register writing module is mainly configured to write and store an external input control signal in a corresponding register at a beginning of each frame. The NUC control circuit is configured to take the external input control signal as NUC correction data and store it in the corresponding register during a reset period of each frame. The central control circuit is configured to control timing of completing digital control modules such as row selection control and column selection control and analog channels and control row clearing of the counter under an action of the control signal written during the beginning of each frame. The row selection circuit is configured to generate a row selection signal for each row of pixels under an action of the central control circuit. The column selection circuit is configured to generate a column selection signal for each column of pixels under the action of the central control circuit. The row/column protection circuit is configured to count a high level time of the row/column selection signal generated by the row/column selection circuit to avoid a phenomenon where a certain row/column of pixels is always selected and burned due to heat accumulation. The transcoding circuit is configured to convert the signal output by the row/column selection circuit into a natural binary signal. The parallel-to-serial conversion circuit is configured to convert a parallel signal output by the pixel array into a serial signal.

The readout circuit module is connected to the outside in two parts. One part is a power supply interface, which provides 0 to 15V DC voltage for the readout circuit. The other part is an image output interface. The readout circuit converts the resistance value into a voltage value and outputs an 8-bit monochrome grayscale image with a resolution of 64*64@60Hz.

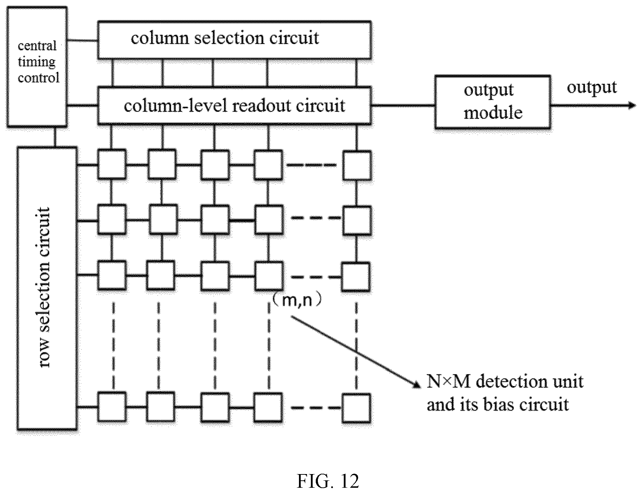

FIG. 12 is a schematic diagram showing the principle of a row selection/column selection circuit according to the present disclosure. For example, if a cell at the $m^{th}$ row and the $n^{th}$ column is to be read out, that is, the row selection circuit selects the $m^{th}$ row and the column-level readout channel selects the $n^{th}$ column, then the cell (m, n) can be output through the output module.

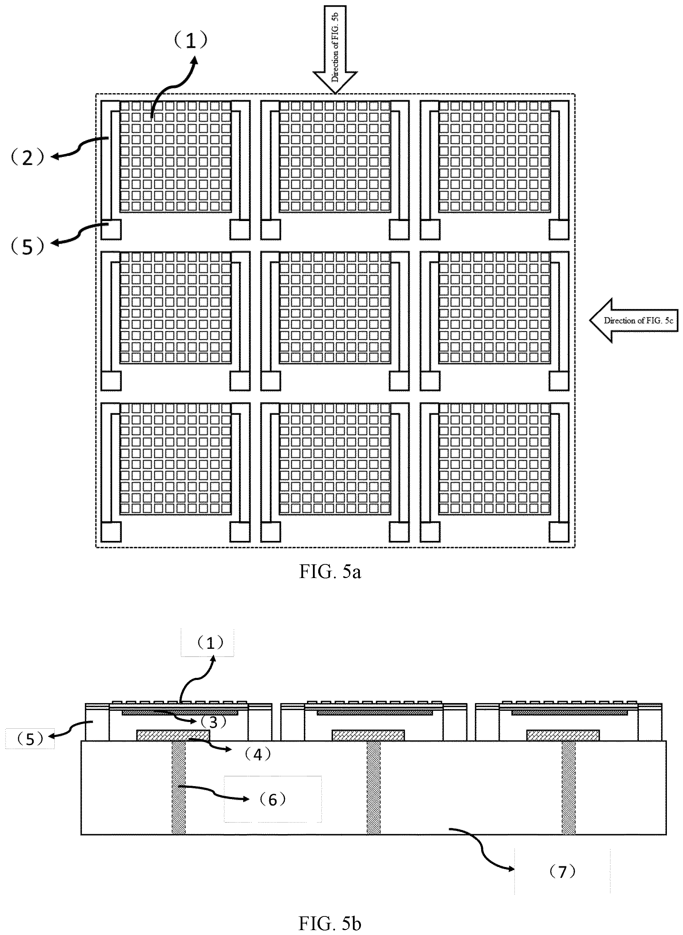

FIG. 5 is a schematic view of a $3\times3$ array in a metasurface wave absorbing module in an embodiment of the present disclosure, in which FIG. 5a is a top view, FIG. 5b is a side view 1, and FIG. 5c is a side view 2.

FIG. 8 is a schematic diagram of a terahertz focal plane imaging system according to the present disclosure. The terahertz focal plane imaging system according to the present disclosure includes the above-mentioned imaging detector, a first off-axis parabolic mirror, a second off-axis parabolic mirror, a terahertz wave source and a processor. The terahertz wave source is disposed close to the first off-axis parabolic mirror, the imaging detector is disposed close to the second off-axis parabolic mirror, and an imaged object is disposed between the two off-axis parabolic mirrors.

In an optional embodiment of the present disclosure, two completely identical off-axis parabolic mirrors are required (the cross-sectional size of the light-facing surface of the off-axis parabolic mirror is approximately 10 to 15 times the size of the light-facing surface of the metasurface wave absorbing module). When constructing the optical path, a terahertz wave source S1 module is placed at a focus of the first off-axis parabolic mirror S2, so that the central optical axes of the first off-axis parabolic mirror and the second off-axis parabolic mirror S3 coincide, and the light-facing surfaces of the two off-axis parabolic mirrors face each other, and the distance between the two off-axis parabolic mirrors should be greater than one focal length of the off-axis parabolic mirror. The imaging detector 100 is placed near a focus of the second off-axis parabolic mirror, e.g., within 5 mm in front of and behind the focus of the second off-axis parabolic mirror. The distance between the metasurface wave absorbing module and an optical center of the second off-axis parabolic mirror is less than the focal length of the off-axis parabolic mirror, where the optical center refers to a point located at the center of the light-facing surface of the off-axis parabolic mirror. The specific distance between the metasurface wave absorbing module and the optical center of the second off-axis parabolic mirror depends on the size of the metasurface wave absorbing module, the size of the off-axis parabolic mirror, and the focal length.

The imaging detector is connected to the processor, terahertz waves emitted by the terahertz wave source sequentially pass through the first off-axis parabolic mirror, the imaged object and the second off-axis parabolic mirror and are absorbed by the imaging detector. The imaging detector is configured to output the voltage signal to the processor S4, and the processor is configured to receive the voltage signal and process the voltage signal to obtain an image of the imaged object.

All instruments are on the same horizontal plane, and the central optical axis of each parabolic mirror should be located in the same horizontal plane as other instruments. The imaged object S5 has a blocking or attenuation transmission effect on the terahertz waves. During operation, the optical path flow of the terahertz waves is as follows: the 3.4THz terahertz wave source module emits a terahertz signal, which is reflected by the two off-axis parabolic mirrors and converged on the metasurface wave absorbing module. The metasurface wave absorbing module absorbs the waves to generate heat, causing its temperature to rise.

The present disclosure also provides a method for imaging using the terahertz focal plane imaging detector, specifically including steps as follows:

(1) building an imaging system, specifically including: disposing a terahertz wave source at a focus of a first off-axis parabolic mirror, disposing an imaged object between two off-axis parabolic mirrors, disposing the imaging detector near a focus of a second off-axis parabolic mirror, e.g., within 5mm in front of and behind the focus of the second off-axis parabolic mirror, and connecting the imaging detector to a processor, in which a distance between the two off-axis parabolic mirrors is greater than one focal length of the off-axis parabolic mirror, and central optical axes of the two off-axis parabolic mirrors coincide, and light-facing surfaces of the two off-axis parabolic mirrors face each other; a distance between the metasurface wave absorbing module and an optical center of the second off-axis parabolic mirror is less than the focal length of the off-axis parabolic mirror;

(2) turning on the terahertz wave source, passing the terahertz waves emitted by the terahertz wave source through the first off-axis parabolic mirror, the imaged object and the second off-axis parabolic mirror sequentially, and then receiving the terahertz waves by the metasurface wave absorbing module of the imaging detector;

(3) after receiving the terahertz signal by the metasurface wave absorbing module, converting, by the metasurface wave absorbing module, an electromagnetic energy of the terahertz waves into a thermal energy to generate heat, so as to cause the deformation module to deform, driving the magnetic film at the bottom of the metasurface wave absorbing module to move accordingly, thereby converting the deformation displacement into the change in the magnetic field; detecting, by the magnetic detection module, the change in the magnetic field and converting, by the magnetic detection module, the change in the magnetic field into the change in the resistance value, reading, by the data readout module, the resistance signal from the magnetic detection module, converting, by the data readout module, the resistance signal into the voltage signal and then outputting, by the data readout module, the voltage signal to the processor;

(4) receiving, by the processor, the voltage signal and processing, by the processor, the voltage signal to obtain an image of the imaged object.

Compared with the existing terahertz imaging technology, the terahertz focal plane imaging technology based on the magnetoresistive effect and metasurface in the present disclosure has the following characteristics and advantages.

(1) The operating frequency of the imaging detector and implementation method in the present disclosure has design flexibility.

The metasurface wave absorbing module designed in the present disclosure has a very high absorption rate for terahertz waves, and the absorption bandwidth and absorption frequency can be flexibly designed. A metasurface based on artificial electromagnetic control is taken as the wave absorbing module in the present disclosure. Compared with the traditional wave absorption with $VO_x$ materials, the absorption rate is greatly improved. As shown in FIG. 4, the absorption rate reaches 95% at the designed absorption frequency, which is more than doubled compared with the absorption rate of less than 40% of traditional materials in the terahertz band. Secondly, according to the electromagnetic metasurface design theory, the absorption frequency of the metasurface can be adjusted by adjusting the size of the metasurface unit, which provides flexibility in design.

(2) The imaging detector and implementation method in the present disclosure can be used in an operating environment at room temperature.

The technology in the present disclosure belongs to thermal-optical conversion imaging. Compared with the existing terahertz imaging technology that also uses thermal imaging, the technology in the present disclosure can operate at room temperature (293K), has lower requirements for ambient temperature, and does not require large and expensive refrigeration devices, and it is simple and low-cost to use and maintain the imaging detector.

(3) The metasurface array designed in the present disclosure can be arranged on a relatively large scale.

The size of each metasurface pixel designed in the embodiment of the present disclosure is about 230 $\mu$m$\times$230 $\mu$m. When the array scale is 87$\times$87, the size of the entire focal plane array is 2 cm$\times$2 cm, thus realizing a larger-scale array.

To show the array effect, FIG. 9 shows a 3D image of a single pixel (a) and a 3$\times$3 array. As the process matures, the array scale can be further increased without changing the structure.

(4) The imaging detector and the imaging system in the present disclosure have excellent equivalent noise power (NEP) performance.

The equivalent noise power (NEP) of the imaging system in the present disclosure is $63.25\,pW/\sqrt{Hz}$ . Compared with the existing terahertz imaging technology, it is at an advanced level in terahertz imaging systems at room temperature.

The system equivalent noise power (NEP) is equal to the signal power within a 1 Hz output bandwidth when the signal-to-noise ratio is 1. The NEP of this imaging technology is tested and calculated, and NEP is expressed as:

$$NEP_1 = P_0 \times \frac{V_n}{V_0}$$

where $V_n$ and $V_0$ are TMR output voltage signals under noise and terahertz radiation with a $P_0$ power respectively. At this time, because the TMR operates in the linear range, the output voltage signal increases with the increase in the displacement of the magnetic film, that is, the output voltage signal increases with the increase in the power of terahertz waves. $P_0$ is the terahertz power averaged over one pixel, which can be calculated by the following formula:

$$P_0 = \tau_0 \frac{A_d}{4F'^2} P_t$$

wherein $\tau_0$ is the transmission rate of a terahertz lens for the terahertz waves at the working frequency, or expressed as the reflectivity of a reflective parabolic mirror for the terahertz waves at the working frequency; $F$ is the $F$ number of the terahertz lens; $A_d$ is the effective photosensitive area of a focal plane array; and $P_t$ is the emission power density of the terahertz source.

During the test, the output voltage signal of the TMR module is first recorded when there is no terahertz power incident, then the output of the terahertz source is started, and $P_0$ at this time is calculated. Then, the voltage signal of the TMR module at this time is recorded, and two voltage signal matrices are compared to get the NEP value in W. During the test, the bandwidth of the test system is assumed to be B, that is, the output bandwidth of the terahertz source is B, then the unit of $NEP_2 = NEP_1/\sqrt{B}$ is $W/\sqrt{Hz}$ . If the bandwidth of the test system is 1Hz, then $NEP_1$ and $NEP_2$ are the same in value.

According to the temperature-light intensity characteristic curve of the prepared polydimethylsiloxane upconverting nanoparticles (PDMS-UCNPs), the minimum temperature change that the PDMS-UCNPs film can output is $\Delta T = 1K$, and the absorption rate of the wave absorbing plate is 80%. The terahertz power received by each pixel is calculated from the emission power of the terahertz source during the test to be $P_0 = 0.002$mW, and the emission bandwidth B of the terahertz source is about 1GHz. It is calculated that:

$$NEP = P_0/\sqrt{B} = 6.325 \times 10^{-11}(W/\sqrt{Hz}) = 63.25(pW/\sqrt{Hz})$$

(5) The response time of the imaging method in the present disclosure is within 100 mS, which can meet the requirements of real-time imaging.

The response time of the imaging system is the time from the start of imaging to the output of a first frame of image. In the imaging method in the present disclosure, the response time can be regarded as the addition of two parts of time. The first part is the time taken from a moment when the terahertz source emits terahertz radiation to a moment when the displacement of the cantilever wave absorbing structure reaches 63.2% of the steady-state displacement. The second part is the time taken from a moment when the TMR and its readout circuit detect the change in the magnetic field to a moment when the voltage signal is output. Since the deformation of the cantilever is synchronized with the temperature change of the cantilever, the first part of time is the time taken for the temperature of the cantilever wave absorbing structure to rise to 63.2% of the steady-state temperature. The speed of the temperature change is only related to the structure of the focal plane array and the ambient temperature. After simulation testing, as shown in FIG. 8, the time taken for the temperature of the cantilever wave absorbing structure to rise to 63.2% of the steady-state temperature is 60 mS, that is, the first part of time is 60 mS. In the second part of time, the processing time of the readout circuit does not exceed 40mS, so the total response time of this imaging technology is 100mS.

The above description is only the best specific implementation mode of the present disclosure, but the protection scope of the present disclosure is not limited thereto. Any changes or substitutions that can be easily thought of by any technician familiar with the technical field within the technical scope disclosed by the present disclosure should be covered within the protection scope of the present disclosure.

The contents not described in detail in the specification of the present disclosure belong to the common knowledge of the person skilled in the art.

## Claims

1. A terahertz focal plane imaging detector, **characterized by** comprising a metasurface wave absorbing module, a deformation module, a magnetic detection module, and a data readout module, wherein the deformation module is connected to the metasurface wave absorbing module, a magnetic film is provided at a bottom of the metasurface wave absorbing module, and the metasurface wave absorbing module is configured to absorb waves to generate heat after receiving a terahertz signal, so as to cause the deformation module to deform, driving the magnetic film at the bottom of the metasurface wave absorbing module to move accordingly, thereby converting a deformation displacement into a change in a magnetic field; the magnetic detection module is configured to detect the change in the magnetic field and convert the change in the magnetic field into a change in a resistance value, and the data readout module is configured to read a resistance signal from the magnetic detection module and convert the resistance signal into a voltage signal and then output the voltage signal outwardly.

2. The terahertz focal plane imaging detector according to claim 1, wherein the metasurface wave absorbing module comprises a pixel array composed of n×m metasurface pixels, each metasurface pixel comprises p×q metasurface units, each metasurface pixel corresponds to one deformation module, one magnetic detection module and one data readout module, and a total of n×m deformation modules, n×m magnetic detection modules and n×m data readout modules are included in the metasurface wave absorbing module, where n, m, p, and q are all positive integers greater than or equal to 1.

3. The terahertz focal plane imaging detector according to claim 1 or 2, wherein each metasurface pixel of the metasurface wave absorbing module comprises a top layer, a middle layer, a bottom layer and a magnetic film, and the layers are tightly bonded, wherein the magnetic film has a thickness of 5 to 10 $\mu$m and is coated on a lower surface of the bottom layer.

4. The terahertz focal plane imaging detector according to claim 3, wherein the magnetic film is formed by coating neodymium iron boron (NdFeB) on the lower surface of the bottom layer by chemical vapor deposition.

5. The terahertz focal plane imaging detector according to claim 1, wherein the deformation module comprises cantilever beams, a pillar and a substrate, and the number of the cantilever beams is two, the cantilever beams are symmetrically disposed on both sides of the metasurface pixel, and a first end of the cantilever beam is bent and connected to the metasurface pixel, and a second end of the cantilever beam is connected to the pillar, the pillar is disposed on the substrate, and the metasurface wave absorbing module is in a suspended state by being connected to the deformation module.

6. The terahertz focal plane imaging detector according to claim 5, wherein the cantilever beam is a double-layer structure with two layers tightly bonded, and materials of the two layers are Au and $Si_3N_4$ respectively.

7. The terahertz focal plane imaging detector according to claim 1, wherein the magnetic detection module is a TMR film disposed on a surface of the substrate of the deformation module; and the TMR film has a thickness of 5 to 10 $\mu$m.

8. The terahertz focal plane imaging detector according to claim 7, wherein the TMR film is coated on the surface of the substrate by chemical vapor deposition, specifically by using a vapor deposition device to sequentially evaporate iron

oxide $Fe_3O_4$, aluminum oxide $Al_2O_3$ and iron oxide $Fe_3O_4$.

9. The terahertz focal plane imaging detector according to claim 1, 7 or 8, wherein a distance between the magnetic film and the TMR film is 10 to 20 $\mu$m; an area relationship between the magnetic film, the TMR film and a wave absorbing surface is: an area of the wave absorbing surface > an area of the magnetic film > an area of the TMR film; the area of the TMR film is 50% to 80% of the area of the magnetic film; the area of the magnetic film is 50% to 80% of the area of the wave absorbing surface.

10. The terahertz focal plane imaging detector according to claim 1, 7 or 8, wherein a topological structure of the TMR film is a TMR push-pull half-bridge unit, the TMR push-pull half-bridge unit includes TMR1 and TMR2, TMR1 is placed in a positive sensitive direction opposite to a positive sensitive direction of TMR2, a first end of TMR1 is connected to a bias voltage $V_{bias}$, and a second end of TMR1 is connected to a first end of TMR2, a second end of TMR2 is grounded, and an output signal $V_{out}$ is derived from a connection between TMR1 and TMR2.

11. The terahertz focal plane imaging detector according to claim 1, wherein the data readout module comprises an analog module and a digital module, wherein the analog module is configured to convert the resistance signal received from the magnetic detection module into the voltage signal, and output the voltage signal to the digital module after filtering and amplification, and the digital module is configured to digitize the voltage signal received.

12. The terahertz focal plane imaging detector according to claim 11, wherein the analog module includes a reference current source circuit, a digital readout channel, a current comparator circuit, a ramp generator circuit, and an LVDS driving and receiving module, wherein the reference current source circuit is configured to provide a current reference; the digital readout channel is composed of a detection bridge branch, a reference bridge branch, a non-uniformity correction circuit, an integral amplifying circuit, a sampling and holding circuit, a comparator and a signal acquisition circuit, and configured to perform signal readout and digital output; the ramp generator circuit and the current comparator circuit constitute a single slope ADC, which is configured to perform digital output; the LVDS driving and receiving module constitutes an LVDS high-speed input and output interface circuit, which is configured to perform high-speed data transmission;the digital module comprises a central control circuit, a static register writing module, a NUC control circuit, a counter circuit, a row/column selection circuit, a transcoding circuit, a parallel-to-serial conversion circuit, and a row/column protection circuit, wherein the static register writing module is configured to write and store an external input control signal in a corresponding register at a beginning of each frame; the NUC control circuit is configured to take the external input control signal as NUC correction data and store it in the corresponding register during a reset period of each frame; the central control circuit is configured to control timing of completing row selection control and column selection control and control row clearing of the counter circuit under the control signal written during the beginning of each frame; the row selection circuit is configured to generate a row selection signal for each row of pixels under an action of the central control circuit; the column selection circuit is configured to generate a column selection signal for each column of pixels under the action of the central control circuit; the row/column protection circuit is configured to count a high level time of the row/column selection signal generated by the row/column selection circuit to avoid a phenomenon where a certain row/column of pixels is always selected and burned due to heat accumulation; the transcoding circuit is configured to convert the signal output by the row/column selection circuit into a natural binary signal; the parallel-to-serial conversion circuit is configured to convert a parallel signal output by the pixel array into a serial signal.

13. A terahertz focal plane imaging system, **characterized by** comprising the imaging detector according to claims 1 to 12, a first off-axis parabolic mirror, a second off-axis parabolic mirror, a terahertz wave source and a processor, wherein the terahertz wave source is disposed close to the first off-axis parabolic mirror, the imaging detector is disposed close to the second off-axis parabolic mirror, an imaged object is disposed between the two off-axis parabolic mirrors, the imaging detector is connected to the processor, terahertz waves emitted by the terahertz wave source pass through the first off-axis parabolic mirror, the imaged object and the second off-axis parabolic mirror sequentially and are absorbed by the imaging detector, the imaging detector is configured to output the voltage signal to the processor, and the processor is configured to receive the voltage signal and process the voltage signal to obtain an image of the imaged object.

14. The terahertz focal plane imaging system according to claim 13, wherein the terahertz wave source is disposed at a focus of the first off-axis parabolic mirror; and the imaging detector is disposed within 5 mm in front of and behind a focus of the second off-axis parabolic mirror.

15. The terahertz focal plane imaging system according to claim 14, wherein a distance between the two off-axis parabolic mirrors is greater than one focal length of the off-axis parabolic mirror, and central optical axes of the two off-axis parabolic mirrors coincide, and light-facing surfaces of the two off-axis parabolic mirrors face each other; a distance between the metasurface wave absorbing module and an optical center of the second off-axis parabolic mirror is less than the focal length of the off-axis parabolic mirror.

16. A method for imaging using the terahertz focal plane imaging detector according to any one of claims 1 to 12, **characterized by** comprising:

   (1) building an imaging system, specifically comprising: disposing a terahertz wave source near a first off-axis parabolic mirror, disposing an imaged object between two off-axis parabolic mirrors, disposing the imaging detector near a second off-axis parabolic mirror, and connecting the imaging detector to a processor;
   (2) turning on the terahertz wave source, passing terahertz waves emitted by the terahertz wave source through the first off-axis parabolic mirror, the imaged object and the second off-axis parabolic mirror sequentially, and then receiving the terahertz waves by the metasurface wave absorbing module of the imaging detector;
   (3) after receiving the terahertz waves by the metasurface wave absorbing module, converting, by the metasurface wave absorbing module, an electromagnetic energy of the terahertz waves into a thermal energy to generate heat, so as to cause the deformation module to deform, driving the magnetic film at the bottom of the metasurface wave absorbing module to move accordingly, thereby converting the deformation displacement into the change in the magnetic field; detecting, by the magnetic detection module, the change in the magnetic field and converting, by the magnetic detection module, the change in the magnetic field into the change in the resistance value, reading, by the data readout module, the resistance signal from the magnetic detection module, converting, by the data readout module, the resistance signal into the voltage signal and then outputting, by the data readout module, the voltage signal to the processor; and
   (4) receiving, by the processor, the voltage signal and processing, by the processor, the voltage signal to obtain an image of the imaged object.

17. The method for imaging using the terahertz focal plane imaging detector according to claim 16, wherein in step (1), the terahertz wave source is disposed at a focus of the first off-axis parabolic mirror; the imaging detector is disposed within 5 mm in front of and behind a focus of the second off-axis parabolic mirror;

   a distance between the two off-axis parabolic mirrors is greater than one focal length of the off-axis parabolic mirror, and central optical axes of the two off-axis parabolic mirrors coincide, and light-facing surfaces of the two off-axis parabolic mirrors face each other; a distance between the metasurface wave absorbing module and an optical center of the second off-axis parabolic mirror is less than the focal length of the off-axis parabolic mirror; the off-axis parabolic mirrors are adjusted so that the terahertz waves emitted by the terahertz wave source impinge on the pixel array of the metasurface wave absorbing module and form a parallel beam between the two off-axis parabolic mirrors.

terahertz wave → wave absorbing module → heat power → deformation module → displacement

change in resistance ← readout module ← magnetic resistance value ← magnetic detection module ← displacement

FIG. 1

101
102
103
p

FIG. 2a

a
p

FIG. 2b

FIG. 2

FIG. 3a

FIG. 3b

FIG. 3c

FIG. 3

FIG. 4

（1）

（2）

（5）

Direction of FIG. 5b

Direction of FIG. 5c

FIG. 5a

（1）

（3）

（5）

（4）

（6）

（7）

FIG. 5b

FIG. 5c

FIG. 5

FIG. 6

FIG. 7

（S1）

（S2）

（S4）

（S5）

（S3）

（100）

FIG. 8

FIG. 9

FIG. 10a

FIG. 10b

FIG. 10c

FIG. 10

FIG. 11

FIG. 12

| | | |
|---|---|---|
| **INTERNATIONAL SEARCH REPORT** | International application No. | |
| | **PCT/CN2021/127954** | |

**A.    CLASSIFICATION OF SUBJECT MATTER**

G01J 5/48(2006.01)i

According to International Patent Classification (IPC) or to both national classification and IPC

**B.    FIELDS SEARCHED**

Minimum documentation searched (classification system followed by classification symbols)

G01J

Documentation searched other than minimum documentation to the extent that such documents are included in the fields searched

Electronic data base consulted during the international search (name of data base and, where practicable, search terms used)

CNKI, CNPAT, WPI, EPODOC: CNTXT: 变形, 形变, 磁, 磁性, 层, 片, 膜, 探测, 太赫兹焦平面, 阻值, 电阻值, 探测器, focal plane, terahertz, metamaterial absorber, metasurface, magnet, film? or layer?, heat+, shape 2d chang+, variant+, deform+

**C.    DOCUMENTS CONSIDERED TO BE RELEVANT**

| Category* | Citation of document, with indication, where appropriate, of the relevant passages | Relevant to claim No. |
|---|---|---|
| A | CN 103575403 A (PEKING UNIVERSITY) 12 February 2014 (2014-02-12) description, paragraphs [0007]-[0016], and figures 1-4 | 1-17 |
| A | CN 103575407 A (PEKING UNIVERSITY) 12 February 2014 (2014-02-12) entire document | 1-17 |
| A | CN 104458011 A (PEKING UNIVERSITY) 25 March 2015 (2015-03-25) entire document | 1-17 |
| A | CN 105891609 A (PEKING UNIVERSITY) 24 August 2016 (2016-08-24) entire document | 1-17 |
| A | CN 103983364 A (GONG CHENG) 13 August 2014 (2014-08-13) entire document | 1-17 |
| A | CN 104792420 A (PEKING UNIVERSITY) 22 July 2015 (2015-07-22) entire document | 1-17 |
| A | US 2008237469 A1 (NEC CORP. et al.) 02 October 2008 (2008-10-02) entire document | 1-17 |

☐ Further documents are listed in the continuation of Box C.     ☑ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **18 June 2022** | **08 July 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

<div align="center">

**INTERNATIONAL SEARCH REPORT**
Information on patent family members

</div>

International application No.

**PCT/CN2021/127954**

| Patent document cited in search report | | | Publication date (day/month/year) | Patent family member(s) | | | Publication date (day/month/year) |
|---|---|---|---|---|---|---|---|
| CN | 103575403 | A | 12 February 2014 | None | | | |
| CN | 103575407 | A | 12 February 2014 | None | | | |
| CN | 104458011 | A | 25 March 2015 | None | | | |
| CN | 105891609 | A | 24 August 2016 | None | | | |
| CN | 103983364 | A | 13 August 2014 | None | | | |
| CN | 104792420 | A | 22 July 2015 | WO | 2015109678 | A1 | 30 July 2015 |
| US | 2008237469 | A1 | 02 October 2008 | JP | 2008241439 | A | 09 October 2008 |

Form PCT/ISA/210 (patent family annex) (January 2015)

**REFERENCES CITED IN THE DESCRIPTION**

**Patent documents cited in the description**

- CN 2021111926333